# EUROPEAN PATENT SPECIFICATION

(11) **EP 1 501 042 B1**
(45) Date of publication and mention of the grant of the patent: **13.06.2012**
(21) Application number: 04016176.2
(22) Date of filing: 09.07.2004
(51) Int. Cl.: G06K 13/08

(54) **Card processing unit**
Kartenverarbeitungseinheit
Unité de traitement de carte

(30) Priority: 25.07.2003 JP 2003201570
(43) Date of publication of application: 26.01.2005
(73) Proprietor: Hitachi-Omron Terminal Solutions, Corp., Tokyo (JP)
(72) Inventor: Nakabo, Akinobu c/o Omron Corp., Shiokoji-dori, Shimogyo-ku, Kyoto-shi, Kyoto 600-8530 (JP)
(74) Representative: Käck, Jürgen

(56) References cited:
- EP-A- 0 696 008
- EP-A- 1 035 495

## Description

### BACKGROUND OF THE INVENTION

### 1. Field of the Invention

The present invention relates to a card processing unit such as a card reader writer used in an information processing equipment, and more particular, to a mechanism that locks a card in a manner to prevent pulling-out of the card while the card is subjected to data processing and releases locking when the processing is finished

### 2. Description of Related Art

A card reader writer used in an information processing equipment such as automatic cash transaction apparatuses and electronic money transaction processing apparatuses performs reading or writing of data on a card when a card, such as an IC card or a magnetic card, that stores predetermined data is inserted by a user. However, when the card is pulled out from the card reader writer during such data processing, there is a fear that the data processing is not performed normally and data are destroyed. Here, in order to prevent this, the card reader writer is provided with a mechanism that performs locking to block the passage of a card to prevent pulling-out of the card when the card is fully inserted inside and clears the passageway of the card and releases locking when the processing of the card is finished.

The lock mechanism having the function described above has been heretofore desired to prevent unlocking during data processing even when a user tries to pull the card out by sheer force. Patent Documents 1 and 2 describe card reader writers provided with a lock mechanism that meets this need.
[Patent Document 1]
   JP-A-2000-259777 (pages 3-4, Fig. 1, Fig. 7)
[Patent Document 2]
   JP-A-2000-293639 (pages 5-7, Figs. 8 to 16)

With the card reader writer disclosed in Patent Document 1 and representing the closest prior art, when a card is inserted, a motor rotates to rotate a crank fixed to a motor shaft in a clockwise direction, and a lock lever connected to the crank via a crank pin is moved obliquely downward to lock the card. When data processing is finished, the motor rotates in reverse to rotate the crank in a counterclockwise direction, and the lock lever is moved obliquely upward to release locking. Since such lock mechanism is constructed so that when the card is locked, the central position of the crank pin becomes lower in level than a center of the motor shaft, if the card is pulled this pulling force is transmitted to the lock lever from the trailing end of the card, and the lock lever in turn applies force to rotate the crank in a clockwise direction so that the locked state is still more difficult to release.

With the card reader writer disclosed in Patent Document 2, when a card is inserted, a push rod is pushed by the leading end of the card and is moved in the direction of card insertion and interlocking with the movement, a card lock hook is turned forward to lock the card. A lock lever is turned rightward by elastic force of a spring when a solenoid is energized, and the push rod is moved in the direction of card insertion by the lever and is locked so as not to be moved in the direction of card pulling-out, and the card lock hook maintains the card in a locked state. When data processing is finished, the solenoid is energized to an opposite polarity to turn the lock lever leftward to release locking of the push rod. When the locking is released, the push rod is moved in the direction of card pulling-out by a spring, and together with that movement, the card lock hook is turned rearward to release locking of the card. With such a lock mechanism, since the push rod is locked by the lock lever, the push rod is not moved in the direction of card pulling-out if the user tries to pull the locked card out, and the card lock hook is not turned rearward, so that locking of the card is not released.

However, a user of an information processing equipment continues in some cases to pull a card put in a locked state during the data processing since the user wants to pull out the card from a card reader writer immediately after the termination of data processing in the case where the user is in a rush to do data processing on the card. In the case where the card continues to be pulled in this manner, however, it is very difficult with a conventional card reader writer to release locking of a card after the termination of data processing even when release of locking is attempted. With, for example, the card reader writer disclosed in Patent Document 1, when a card is pulled in a locked state, a force with which the card is pulled, is transmitted to the lock lever from a trailing end of the card to act on the crank pin to be liable to rotate the crank in a clockwise direction, so that the motor must be reversely rotated against the force with which the card is pulled, turning the crank in a counterclockwise direction in order to release locking, and thus it becomes very difficult to release locking. Also, with the card reader writer disclosed in Patent Document 2, when a card in a locked state is pulled, the force with which the card is pulled, is transmitted to the card lock hook and the push rod from the trailing end of the card to act on the portion where the push rod and the lock lever contact, so that the push rod is pushed against the lock lever. Therefore, even when the solenoid is energized to release locking while the card is pulled, the lock lever is hard to separate from the push rod, so that it becomes very difficult to release locking of the push rod and it becomes also very difficult to release locking of the card.

### SUMMARY OF THE INVENTION

The invention solves the problems described above, and has its object to provide a card processing unit, in which locking is not released even when a card is pulled during data processing and locking can be easily released while the card is pulled after the data processing is finished.

The invention is defined in claim 1. Particular embodiments of the invention are set out in the dependent claims.

A card processing unit according to the invention comprises a first beam that turns about a first fulcrumto thereby cause a pawl to spring into a passage of a card to block the passage, and that causes the pawl to retreat from the passage of a card to clear the passage, a second beam that turns about a second fulcrum, a third beam that connects rotatably to the first beam at a first joint other than the first fulcrum and connects rotatably to the second beam at a second joint other than the second fulcrum, a stopper adapted to restrict movements of the third beam, and an actuator that turns the second beam, and wherein when the pawl blocks the passage of a card, the first joint, the second joint, and the second fulcrum are aligned substantially on a straight line.

With the above construction, when the actuator turns the second beam about the second fulcrum in its predetermined direction after a card is fully inserted in the card processing unit, the third beam connected to the second beam at the second joint is moved, and the third beam turns the first beam, which is connected to the third beam at the first joint, about the first fulcrum in its predetermined direction. Thereby, the pawl provided on the first beam springs into the passage of a card to block the passage. A state thus results in which a card is locked so that it cannot be pulled out from within the unit. Also, at this time, the first joint, the second joint, and the second fulcrum are aligned substantially on a straight line. Then, when the actuator turns the second beam about the second fulcrum in a direction opposed to the above predetermined direction after the data processing on a card which was inserted is finished, the third beam is moved, and the third beam turns the first beam about the first fulcrum in a direction opposed to the predetermined direction. Thereby, the pawl provided on the first beam retreats from the passage of a card to clear the passage. That is, a state results in which locking of a card is released, so that it becomes possible to pull out the card from within the unit.

With such a lock mechanism, in the case where a card is pulled while the card which is inserted is being subjected to data processing, the card abuts against the first beam, and the force with which the card is pulled, is transmitted to the first beam and applies to the first beam an angular moment about the first fulcrum. Then, the angular moment is transmitted to the third beam via the first joint, and a force acts to move the third beam in a direction parallel to a straight line that connects between the first joint and the second joint, and toward the second beam. Since at this time, the first joint, the second joint, and the second fulcrum are aligned substantially on a straight line as described above, however, the above-mentioned force is cancelled by a reaction force from the second fulcrum that is a fixed point, and therefore the third beam will not be moved. Therefore, the first beam is not turned about the first fulcrum and the pawl that blocks the passage of a card will not be cleared from the passage. That is, locking will not be released even when a card is pulled while the data processing is performed on the card.

Also, in the case where a card is pulled after the data processing on the card is finished, the actuator turns the second beam in a direction opposed to the above predetermined direction, and thus an angular moment about the second fulcrum acts on the second beam. The angular moment turns the second beam, and a force in a direction perpendicular to a straight line that connects the first joint, the second joint, and the second fulcrum acts on the second joint, so that the third beam is moved. At this time, the third beam is moved and the first joint, the second joint, and the second fulcrum that have been aligned cease to form a straight line, and the second beam is easily turned and also the third beam is easily moved since the force with which a card is pulled exerts on the third beam a force to move the third beam in a direction parallel to a straight line that connects between the first joint and the second joint, and toward the second beam. Therefore, the first beam is easily turned about the first fulcrum in a direction opposed to the above predetermined direction and the pawl blocking the passage of the card is cleared from the passageway. That is, locking can be easily released even while the card is being pulled after the data processing on the card is finished.

Also, according to the invention, when the pawl blocks the passage of a card, the straight line that connects the first joint, the second joint, and the second fulcrum intersects a straight line that connects the first joint and the first fulcrum substantially perpendicularly. With such an arrangement, in the case where a card is pulled while the card which is inserted is being subjected to data processing, an angular moment about the first fulcrum of the first beam, produced by the pulling force, is transmitted to the third beam via the first joint, and the force that is applied to move the third beam is concentrated in a direction parallel to a straight line that connects between the first joint and the second joint, and toward the second beam, and is not dispersed. Therefore, the force is reliably cancelled by the reaction force from the second fulcrum, and the third beam is not moved, so that the first beam is not turned and the pawl blocking the passage of the card will not be cleared from the passage.

Also, according to the invention, the actuator turns the second beam in its predetermined direction, whereby the third beam is moved, and the third beam turns the first beam in its predetermined direction to cause the pawl to block the passage of a card and to align the first joint, the second joint, and the second fulcrum substantially in a straight line, and a stopper is provided to restrict movement of the third beam after the alignment substantially on a straight line is achieved. With such arrangement, it is possible to prevent the third beam from excessively moving due to errors in the dimensions of the respective parts etc. which would cause the first joint, the second joint, and the second fulcrum, which have once been aligned on a substantially straight line, to get out of alignment. Also, when the pawl blocks the passage of a card, it is possible to prevent the first joint, the second joint, and the second fulcrum from getting out of alignment in a substantially straight line even if a card is pulled with an abnormally great force, and after this pulling force is transmitted the first beam and the third beam applies a force to turn the second beam in its predetermined direction.

Also, according to the invention, the actuator comprises a solenoid that exerts a force to turn the second beam in its predetermined direction, and a spring that biases the second beam in a direction opposed to this predetermined direction with a smaller force than the force of the solenoid. With such arrangement, when the solenoid is energized after a card is fully inserted into the card processing unit, the second beam is turned in its predetermined direction whereby the third beam is moved, and the third beam turns the first beam in its predetermined direction, so that the pawl springs into the passage of a card to block the passage. Then, when driving of the solenoid is stopped after the data processing on the inserted card is finished, the elastic force of the spring turns the second beam in the direction opposite to its predetermined direction, whereby the third beam is moved, and the third beam turns the first beam in the direction opposite to the predetermined direction, so that the pawl retreats from the passage of a card to clear the passage. Also, in a state in which electricity is cut off or the electric source for the information processing equipment is not turned on, introduction of an electric current to the card reader writer is cut off and the solenoid is not energized, so that even when a card is inserted, the respective beams are not moved and the pawl will not spring into the passage of a card to block the passage. That is, the card as inserted is not locked and can be pulled out from within the unit. Further, in the case where electric current to the card reader writer is cut off while a card is subj ected to data processing, driving of the solenoid is stopped, so that the respective beams are moved by the elastic force of the spring and the pawl retreats from the passage of a card to clear the passage. That is, the same state results as when locking of the card is released, and it becomes possible to pull out the card from within the unit.

Further, according to the invention, when the pawl blocks the passage of a card, the first joint, the second joint, and the second fulcrum are aligned substantially on a straight line parallel to the passage of a card. With such arrangement, the lock mechanism can be made small in height to make the card processing unit small in size.

### BRIEF DESCRIPTION OF THE DRAWINGS

Fig. 1 is a perspective view showing a card reader writer.
Fig. 2 is a perspective view showing a lock mechanism of the card reader writer in an exploded state.
Fig. 3 is a view illustrating the operation of the card reader writer.
Fig. 4 is a view illustrating the operation of the card reader writer.
Fig. 5 is a view illustrating the operation of the card reader writer.
Fig. 6 is a view showing another embodiment.
Fig. 7 is a view showing a still another embodiment.

### DESCRIPTION OF PREFERRED EMBODIMENTS

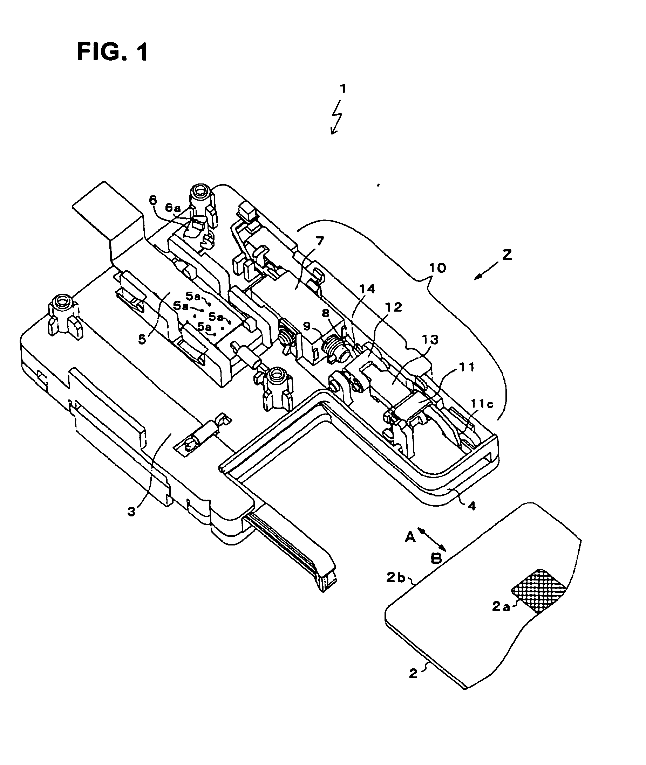

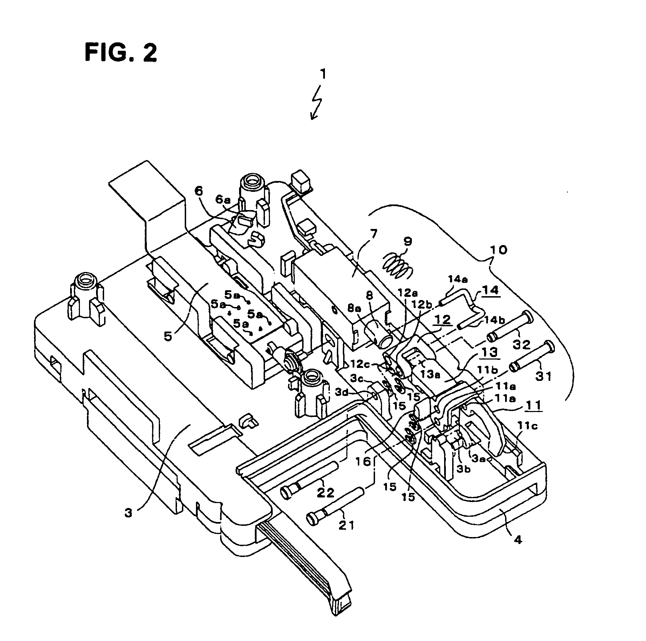

Figs. 1 and 2 are views illustrating a construction of a card reader writer as an example of a card processing unit according to the invention. Fig. 1 is a perspective view showing the card reader writer, and Fig. 2 is a perspective view showing a lock mechanism of Fig. 1 in an exploded state. In Fig. 1, the reference numeral 1 denotes a card reader writer used in an information processing equipment such as automatic cash transaction apparatuses and electronic money transaction processing apparatuses. The reference numeral 2 denotes a card that stores predetermined data and has an IC contact 2a. The reference numeral 3 denotes a housing that constitutes a body of the card reader writer 1, 4 an insertion port, into which the card 2 is inserted, and 5 a FPC (Flexible Printed Circuit) that mounts IC contacts 5a. When the card 2 is inserted into the insertion port 4 in a direction A, IC contacts 5a of the card reader writer 1 are made to contact with the IC contact 2a to perform reading or writing of data (referred below to as data processing) on the card 2.

The reference numeral 6 denotes a lever that moves in the direction A when a leading end 2b of the card 2 abuts against the lever, and a projection 6a is formed at the upper surface. A substrate (not shown) is mounted on an upper portion of the card reader writer 1, and mounted thereon is a photo sensor that detects full insertion of the card 2. When the card 2 has been fully inserted into the card reader writer 1, the leading end 2b of the card 2 abuts against the lever 6, the lever 6 is moved in the direction A, and the photo microsensor detects the projection 6a of the lever 6 and is switched from an ON state to an OFF state, so that it is detected that the card 2 has been fully inserted into the card reader writer 1. Here, the state in which the card 2 has been fully inserted means a state in which the card 2 has been inserted inside the housing 3 to a position where the IC contacts 5a are brought into contact with the IC contact 2a to afford performing the data processing.

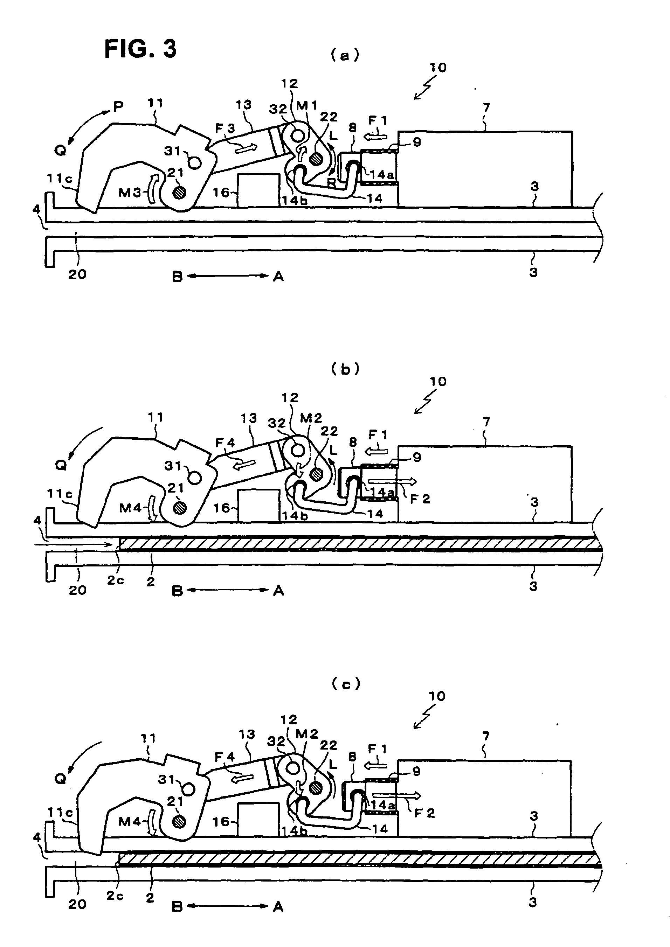

The reference numeral 10 denotes a lock mechanism that locks the card 2 inserted into the card reader writer 1 so as to prevent pulling-out. The reference numeral 11 denotes a first beam, and the beam 11 is rotatably fixed to the housing 3 by inserting a shaft 21 through a hole 11a shown in Fig. 2 and a hole 3b formed in a projection 3a of the housing 3. The shaft 21, about which the first beam 11 turns, is referred below to as first fulcrum 21. The reference numeral 11c denotes a pawl formed on a tip end of the first beam 11. When the first beam 11 turns about the first fulcrum 21 as described later, the pawl 11c springs into a passage 20 (shown in, for example, Fig. 3(a)) of the card 2 to block the passage 20, or retreats from the passage 20 of the card 2 to clear the passage 20.

The reference numeral 12 shown in Fig. 1 denotes a second beam, and the beam 12 is rotatably fixed to the housing 3 by inserting a shaft 22 through a hole 12a shown in Fig. 2 and a hole 3d formed in a projection 3c of the housing 3. The shaft 22, about which the second beam 12 turns, is referred below to as second fulcrum 22. The reference numeral 13 denotes a third beam, and the beam 13 is formed with a hole (not shown) at the portion toward direction B, and is rotatably connected to the first beam 11 by inserting a shaft 31 through the above hole and a hole 11b of the first beam 11. In addition, since the shaft 31 is not fixed to the housing 3, the third beam 13 and the first beam 11 are able to turn relative to each other about the shaft 31. The shaft 31, being a connection point of the third beam 13 and the first beam 11, is referred below to first joint 31. Also, the third beam 13 is formed with a hole 13a in the portion toward the direction A, and is rotatably connected to the second beam 12 by inserting a shaft 32 through the hole 13a and a hole 12b of the second beam 12. In addition, since the shaft 32 is not fixed to the housing 3, the third beam 13 and the second beam 12 can turn relative to each other about the shaft 32. The shaft 32, being a connection point of the third beam 13 and the second beam 12, is referred to below as second joint 32. The reference numeral 15 denotes coming-out preventive metallic parts for preventing coming-out of the respective shafts 21, 22, 31, 32 inserted into the corresponding holes. The reference numeral 16 denotes a stopper that restricts movements of the third beam 13. The housing 3 is protruded whereby the stopper 16 is formed integrally with the housing 3. In addition, instead of the stopper, a separate member may be fixed to and provided on the housing 3.

The reference numeral 7 shown in Fig. 1 denotes a solenoid fixed to the housing 3, and 8 a plunger provided in the solenoid 7. When magnetized and driven by an electric current supplied from the information processing equipment, the solenoid 7 attracts the plunger 8 to move the same in the direction A in which the card 2 is inserted. Then, when driving is stopped, the solenoid 7 ceases attracting the plunger 8. The reference numeral 9 denotes a spring having an elastic force (here, expanding force) smaller than the attractive force of the solenoid 7 and biasing the plunger 8 in the direction B in which the card 2 is pulled out. The reference numeral 14 denotes a fourth beam, and the beam 14 is rotatably connected to the plunger 8 by inserting a shaft portion 14a through a hole 8a of the plunger 8. The shaft portion 14a, being the center of rotation of the fourth beam 14, is referred to below as third fulcrum 14a. Also, the beam 14 is rotatably connected to the second beam 12 by inserting a shaft portion 14b through a hole 12c of the second beam 12 shown in Fig. 2. In addition, since the shaft portion 14b is not fixed to the housing 3, the fourth beam 14 and the second beam 12 can turn relative to each other about the shaft portion 14b. The shaft portion 14b, being the connection point of the fourth beam 14 and the second beam 12, is referred below to as third joint 14b.

By providing the fourth beam 14 as described above, when the solenoid 7 attracts the plunger 8 in the direction A, the fourth beam 14 is moved in the direction A as described later to cause the second beam 12 to turn about the second fulcrum 22. That is, the solenoid 7 turns the second beam 12 via the plunger 8 and the fourth beam 14. Also, when the solenoid 7 releases attraction of the plunger 8, the spring 9 biases the plunger 8 in the direction B whereby the fourth beam 14 is moved in the direction B as described later to cause the second beam 12 to turn about the second fulcrum 22 in a direction opposed to that when the plunger 8 is attracted. That is, the spring 9 turns the second beam 12 via the plunger 8 and the fourth beam 14 in a direction opposed to that when the solenoid 7 is driven.

With the above construction, the first beam 11 constitutes an embodiment of a first beam in the invention, the second beam 12 constitutes an embodiment of a second beam in the invention, and the third beam 13 constitutes an embodiment of a third beam in the invention. The first fulcrum 21 constitutes an embodiment of a first fulcrum in the invention, the second fulcrum 22 constitutes an embodiment of a second fulcrum in the invention, the first joint 31 constitutes an embodiment of a first joint in the invention, and the second joint 32 constitutes an embodiment of a second joint in the invention. The solenoid 7, the spring 9, and the fourth beam 14 constitute an embodiment of an actuator in the invention. The stopper 16 constitutes an embodiment of a stopper in the invention.

Figs. 3 to 5 are views illustrating operations of the card reader writer 1, and Fig. 1 is a side view of the lock mechanism 10 as viewed in a direction Z. The operation of locking the card 2 inserted inside the housing 3 and the operation of unlocking will be described below with reference to the drawings. Fig. 3 (a) shows the standby state before the card 2 is inserted. In this state, the solenoid 7 is not energized, and the plunger 8 is biased by an elastic force F1 of the spring 9 to project in the direction B. Thereby, the fourth beam 14 is pushed by the plunger 8 in the direction B to turn the second beam 12 with an angular moment M1 about the second fulcrum 22 via the third joint 14b in a direction R. Then, the second beam 12 pulls the third beam 13 via the second joint 32 with a force F3, and the third beam 13 turns the first beam 11 with an angular moment M3 about the first fulcrum 21 via the first joint 31 in a direction P. Therefore, the pawl 11c provided on the first beam 11 is put in a state, in which it does not spring into the passage 20 of the card 2 to clear the passage 20 to enable insertion of the card 2 from the insertion port 4.

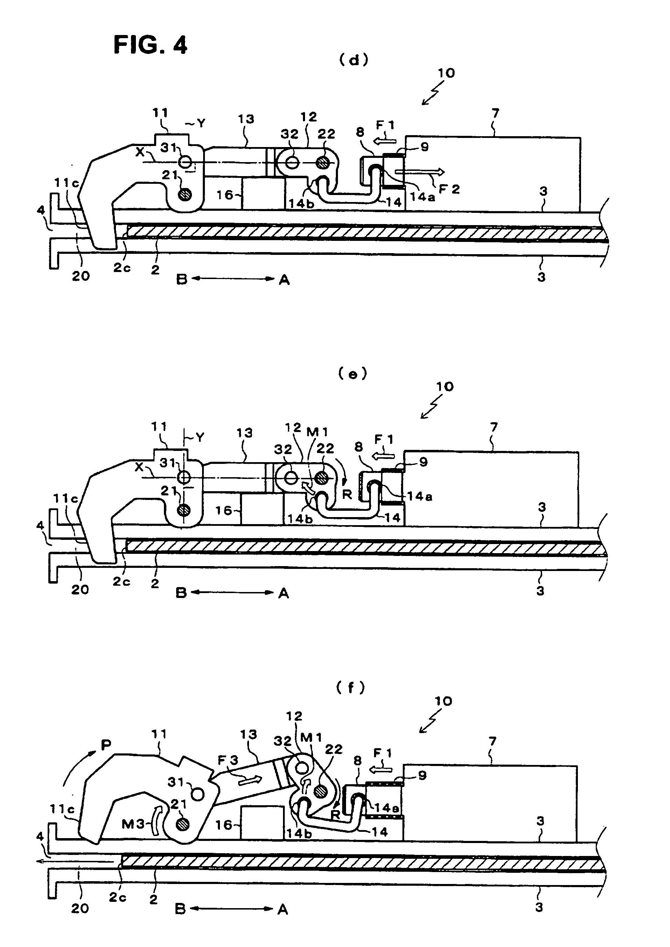

In the above standby state, when the photo sensor detects that the card 2 is inserted from the insertion port 4 in the direction A and has been fully inserted into the card reader writer 1, the solenoid 7 is supplied with an electric current to be magnetized and attract the plunger 8 with a force F2 in the direction A. Thereby, the fourth beam 14 is pulled by the plunger 8 in the direction A, an angular moment M2 acts on the second beam 12 via the third joint 14b, and the second beam 12 is turned about the second fulcrum 22 in direction L. Then, the third beam 13 is pushed via the second joint 32 by the second beam 12 with a force F4, and the movement of the third beam 13 turns the first beam 11 with an angular moment M4 about the first fulcrum 21 via the first joint 31 in direction Q. Therefore, the pawl 11c springs into the passage 20 as shown in Fig. 3(c). Then, when the solenoid 7 fully attracts the plunger 8 in the direction A, movements of the respective beams 11 to 14 cause the pawl 11c to spring further into the passage 20 to completely block the passage 20 as shown in Fig. 4(d). This state is one in which the card 2 is locked so that it cannot be pulled out from within the card reader writer 1. At this time, the first joint 31, the second joint 32, and the second fulcrum 22 are aligned substantially along straight line X. However, there is a fear that the third beam 13 is excessively moved downward due to errors in the dimensions of the respective parts, etc. , but downward movement of the third beam 13 is restricted by the stopper 16 after the state is reached in which the joints 31, 32, and the second fulcrum 22 are aligned on the straight line X, so that the joints 31, 32, and once the second fulcrum 22, have been aligned on the straight line X, they can be prevented from getting out alignment on the straight line X. Also, in the locked state described above, the straight line X, on which the joints 31, 32, and the second fulcrum 22 are aligned, perpendicularly intersects a straight line Y, which connects between the first joint 31 and the first fulcrum 21, to become parallel to the passage 20 of the card 2.

When in the locked state, the card reader writer 1 brings the IC contacts 5a (Fig. 1) into contact with the IC contact 2a (Fig. 1) of the card 2 to perform the data processing on the card 2. When the data processing is finished, a processing termination signal is fed to the card reader writer 1 from the information processing equipment, and the card reader writer 1 that receives the processing termination signal stops introduction of an electric current to the solenoid 7. Thereby, the driving of the solenoid 7 is ended, releasing pull on the plunger 8 so that the plunger 8 is biased by the elastic force F1 of the spring 9 in the direction B as shown in fig. 4(e). Therefore, the fourth beam 14 is pushed by the plunger 8 in the direction B and the angular moment M1 acts on the second beam 12 via the third joint 14b to turn the second beam 12 about the second fulcrum 22 in the direction R. Then, the third beam 13 is pulled via the second joint 32 by the second beam 12 with the force F3 as shown in Fig. 4(f), and movement of the third beam 13 turns the first beam 11 via the first joint 31 with the angular moment M3 about the first fulcrum 21 in the direction P. Thereby, the pawl 11c retreats from the passage 20 to completely clear the passage 20. That is, the state results in which locking of the card 2 is released, and it becomes possible to pull out the card 2 from within the card reader writer 1.

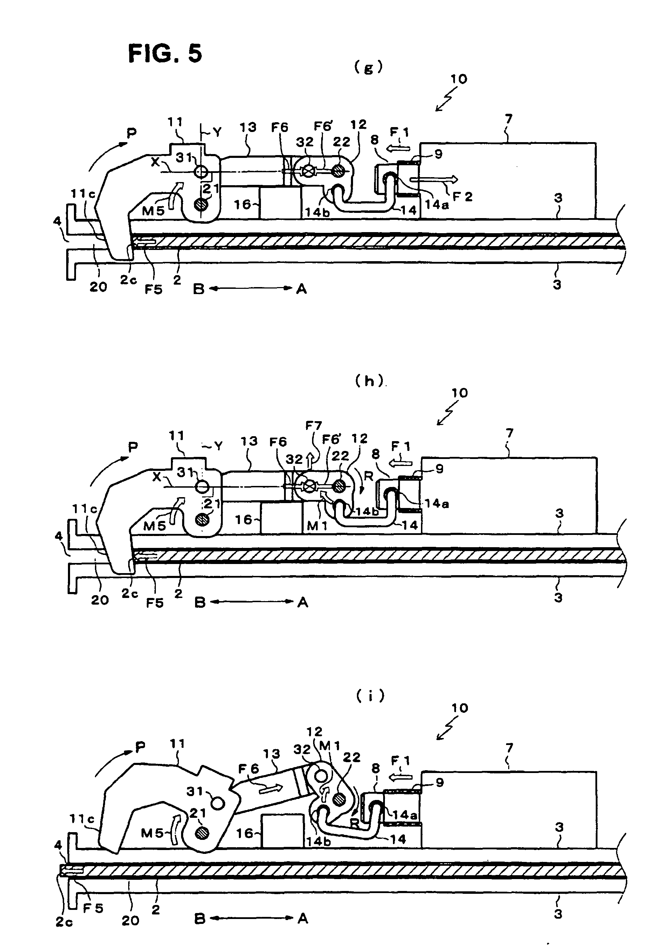

On the other hand, in the locked state shown in Fig. 4 (d), when the card 2 is pulled in the direction B while the data processing is performed on the card 2, the card 2 is moved on the passage 20 and the trailing end 2c of the card 2 abuts against the pawl 11c as shown in Fig. 5(g). Therefore, a force F5 with which the card 2 is pulled, is transmitted to the first beam 11 via the pawl 11c from the trailing end 2c, and an angular moment M5 about the first fulcrum 21 acts on the first beam 11. Then, the angular moment M5 is transmitted to the third beam 13 via the first joint 31 to apply a force F6 that moves the third beam 13. At this time, since the straight line X, which connects the first joint 31, the second joint 32, and the second fulcrum 22 together, perpendicularly intersects the straight line Y, which connects between the first joint 31 and the first fulcrum 21, the force F6 that would move the third beam 13 is exclusively applied in the direction A parallel to the straight line X and toward the second beam 12 and is not dispersed in other directions. When such force F6 applies, the third beam 13 is liable to move. However, since the first joint 31, the second joint 32, and the second fulcrum 22 are aligned on the straight line X as described above, the force F6 is reliably cancelled by the reaction force F6' from the second fulcrum 22, this being a fixed point, so that the third beam 13 does not move. In addition, in the case where the card 2 is pulled in an abnormal way by a special jig or the like, there is a fear that an angular moment acting on the first beam 11 exerts on the third beam 13 a force that is going to turn the second beam 12 in the direction L (shown in, for example, Fig. 3(a)) so that the third beam 13 is moved downward. However, since movement of the third beam 13 is restricted by the stopper 16, the joints 31, 32, and the second fulcrum 22, which are aligned on the straight line X, can be prevented from getting out of alignment on the straight line X, and the third beam 13 is not moved further. When the third beam 13 is not moved as described above, the first beam 11 is not turned about the first fulcrum 21 in the direction P, and the pawl 11c blocking the passage 20 will not be cleared from the passage 20. That is, by virtue of the above, locking will not be released even when the card 2 is pulled while the data processing is performed on the card 2.

When the data processing on the card 2 is finished while the card 2 is being pulled as described above, driving of the solenoid 7 is stopped and attraction of the plunger 8 is ended. Thereby, the plunger 8 is biased by the elastic force F1 of the spring 9 in the direction B and pushes the fourth beam 14 in the direction B, so that the angular moment M1 acts on the second beam 12 via the third joint 14b. Then, the angular moment M1 turns the second beam 12 about the second fulcrum 22 in the direction R and a force F7 in an upward direction perpendicular to the straight line X acts on the second joint 32, so that the third beam 13 is moved upward. At this time, frictional forces on the respective fulcrums 21, 22, 14a and the respective joints 31, 32, 14b serve as forces to obstruct turning of the second beam 12 and movements of the third beam 13 but all the shafts and the shaft portions which constitute such parts are small in radius of rotation, and so the frictional forces are minute and have little influence. As described above, when upward movement of the third beam 13 causes the first joint 31, the second joint 32, and the second fulcrum 22 to deviate from the straight line X, since the force F6 produced by the pulling force F5 on the card 2 is already applied on the third beam 13, the second beam 12 is easily turned in the direction R by the angular moment M1 and the force F6 and together with this the third beam 13 is easily moved upward with the angular moment M1 and the force F6, as shown in Fig. 5 (i). Therefore, the angular moment M5 produced by the pulling force F5 on the card 2 and the angular moment M1 of the second beam 12 transmitted via the first joint 31 cause the first beam 11 to be easily turned about the first fulcrum 21 in the direction P. At this time, a frictional force between the pawl 11c and the trailing end 2c of the card 2 serves as a force to obstruct turning of the first beam 11. However, since the card 2 is small in thickness, the frictional force is minute as compared with the angular moments M1, M5 and so has little influence. The first beam 11 is turned in the direction P as described above whereby the pawl 11c having blocked the passage 20 is moved in the direction P to clear the passage 20. That is, by virtue of the above, locking can be easily released even when the card 2 is pulled after the data processing on the card 2 is finished.

In addition, it has been desired that the lock mechanism for card processing units has the ability of allowing a card to be pulled out because the mechanism is not locked, even when after a user inserts the card, electricity is cut off, or an electric source for an information processing equipment is not made ON, in addition to the functions of the mechanism described above. To meet such demand, in the case where electricity is cut off or so in the card reader writer 1 according to the embodiment, electric current to the card reader writer 1 is cut off and the solenoid 7 is not driven. Therefore, even when the card 2 is inserted from the insertion port 4 while the mechanism is in the standby state shown in Fig. 3(a), the plunger 8 is not attracted and the respective beams 11, 12, 13, 14 are not moved, so that the pawl 11c will not spring into the passage 20 to block the passage 20. That is, the card which has been inserted is not locked in and can be pulled out from the card reader writer 1.

Also, information processing equipment is in some cases put in a state in which electric current is cut off by virtue of service interruption, etc. while the data processing on a card as inserted is performed. In the case where such state occurs in a conventional card reader writer, introduction of an electric current to a card reader writer is also cut off, so that locking of a card cannot be released and a user cannot pull out the card from the card reader writer. For example, with the card reader writer disclosed in Patent Document 1, locking of a card is released by reversely rotating a motor, so that when introduction of an electric current is cut off, the motor cannot be reversely rotated and so locking of the card cannot be released. Also, with the card reader writer disclosed in Patent Document 2, locking of a card effected by a card lock hook is released by energizing a solenoid to an opposite polarity to release locking of a push rod, so that when electric current is cut off, the solenoid cannot be energized, locking of the push rod cannot be released, and locking of the card cannot be also released. In contrast, with the card reader writer 1 according to the embodiment, in the case where introduction of an electric current to the card reader writer 1 is cut off while the card 2 is in the locked state as shown in Fig. 4(d) while the data processing is performed on the card 2, driving of the solenoid 7 is stopped and attraction of the plunger 8 is released. Therefore, the plunger 8 is biased by the elastic force F1 of the spring 9 in the direction B as shown in Fig. 4(f) and the respective beams 11, 12, 13, 14, respectively, are moved, so that the pawl 11c retreats from the passage 20 to clear the passage 20. That is, the state results in which locking of the card 2 is released, and it becomes possible to pull out the card 2 from within the card reader writer 1.

Further, by aligning the first joint 31, the second joint 32, and the second fulcrum 22 substantially on the straight line X and making the straight line X parallel to the passage 20 of the card 2 in the locked state shown in Fig. 4(b), the lock mechanism 10 can be made small in height to make the card reader writer 1 small in size.

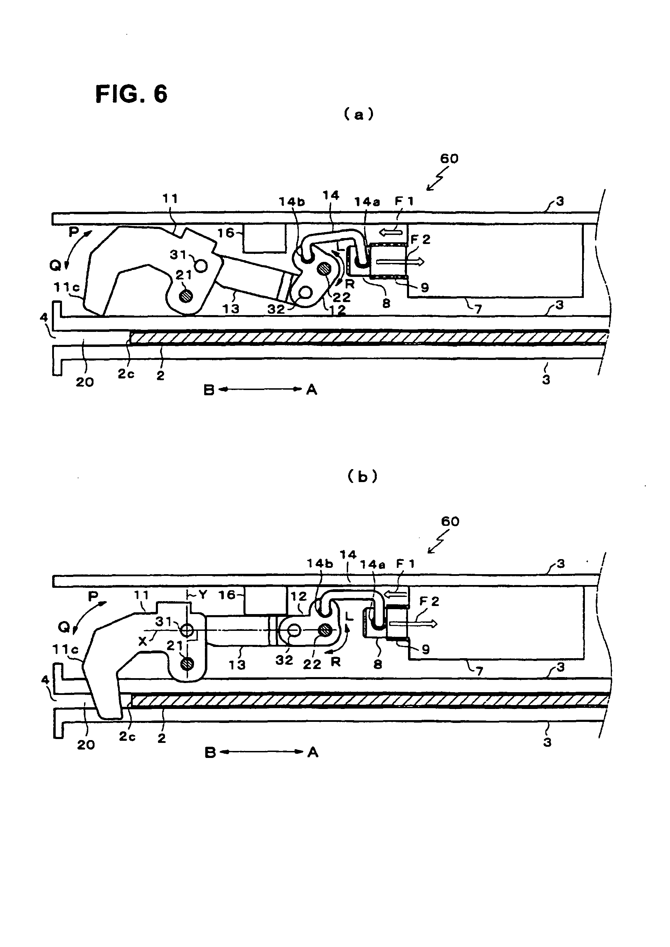

While the embodiments described above show, by way of example, the case of using the lock mechanism 10, in which the plunger 8 of the solenoid 7 is moved in the direction A of insertion of the card 2 to move the third beam 13 downward and cause the pawl 11c to block the passage 20, and the plunger 8 is moved in the direction B of pulling-out of the card 2 to move the third beam 13 upward and clear the passage 20 that has been blocked by the pawl 11c, the invention is not limited thereto. Other than this, for example, a lock mechanism 60 shown in Fig. 6 may be used, in which respective parts except the first beam 11 are mounted upside down differently from the lock mechanism 10 shown in Figs. 3 to 5. In addition, the same parts in Fig. 6 as those shown in Figs. 3 to 5 are denoted by the same reference numerals. With the lock mechanism 60 shown in Fig. 6, when a solenoid 7 attracts a plunger 8 with a force F2 in the direction A which had been in the standby state shown in Fig. 6(a), a second beam 12 is turned via a fourth beam 14 about a second fulcrum 22 in the direction R to move a third beam 13 upward. Therefore, the first beam 11 turns about the first fulcrum 21 in the direction Q, so that the pawl 11c blocks the passage 20 as shown in Fig. 6(b) to put the card 2 in a locked state. Also, when the solenoid 7 releases attraction of the plunger 8 from the locked state shown in Fig. 6(b), the elastic force F1 of the spring 9 causes the second beam 12 to turn via the fourth beam 14 about the second fulcrum 22 in the direction L to move the third beam 13 downward. Therefore, the first beam 11 turns about the first fulcrum 21 in the direction P, so that the pawl 11c is cleared from the passage 20 as shown in Fig. 6(a) to put the card 2 in a released state.

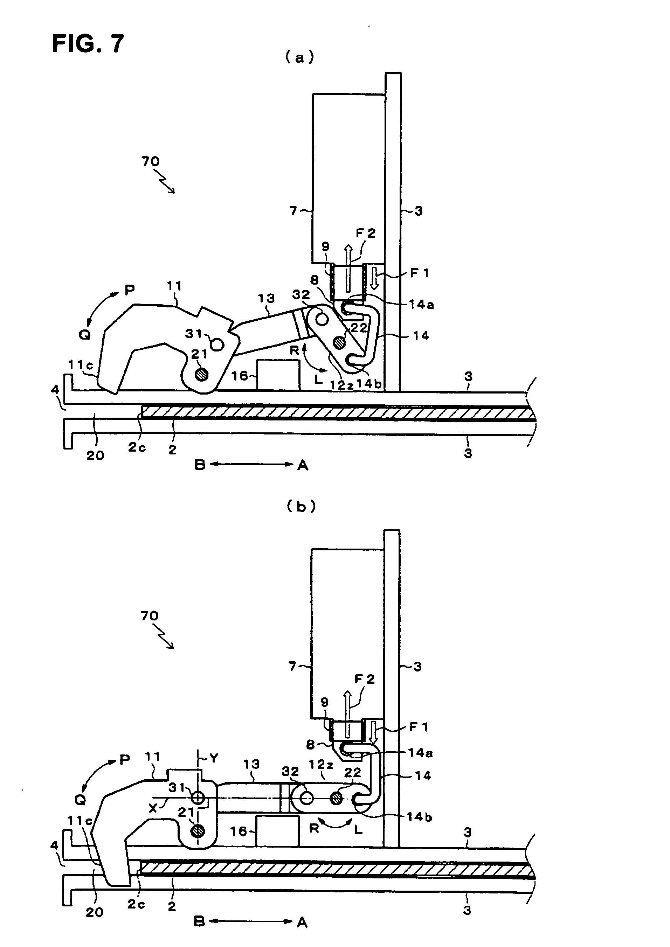

Also, for example, a lock mechanism 70 shown in Fig. 7 may be used, in which a solenoid 7 is mounted so that the direction of movements of a plunger 8 is perpendicular to the passage 20. Here, the same parts in Fig. 7 as the respective parts shown in Figs. 3 to 5 are denoted by the same reference numerals. With the lock mechanism 70 shown in Fig. 7, when the solenoid 7 attracts the plunger 8 which had been in the standby state upward with a force F2 shown in Fig. 7(a), a second straight beam 12z is turned via a fourth beam 14 about a second fulcrum 22 in the direction L to move a third beam 13 downward. Therefore, the first beam 11 turns about the first fulcrum 21 in the direction Q, and the pawl 11c blocks the passage 20 as shown in Fig. 7 (b) to put the card 2 in a locked state. Also, when the solenoid 7 stops pulling the plunger 8 which had been in the position for the locked state shown in Fig. 7(b), the elastic force F1 of the spring 9 causes the second beam 12z to turn via the fourth beam 14 about the second fulcrum 22 in the direction R to move the third beam 13 upward. Therefore, the first beam 11 turns about the first fulcrum 21 in the direction P, and so the pawl 11c clears the passage 20 as shown in Fig. 7 (a) to put the card 2 in a released state.

While the embodiment described above shows, by way of example, the case where the plunger 8 gives the attractive force F2 of the solenoid 7 or the elastic force F1 of the spring 9 to the second beam 12 via the fourth beam 14, the invention is not limited thereto. Other than this, for example, a second beam may be mounted at a tip end of the plunger so that the attractive force of the solenoid is imparted directly to the second beam from the plunger. Also, for example, one end of the spring may be mounted to the second beam and the other end of the spring may be mounted to the housing so that the elastic force of the spring be imparted directly to the second beam to bias the second beam in a predetermined turning direction.

Further, while the embodiment described above shows, by way of example, the card reader writer 1 for IC cards, in which the data processing is performed on an IC card with IC contacts, the invention is also applicable to a card processing unit that performs data processing on various types of cards, such as a card reader writer for magnetic cards that performs data processing on a magnetic card with a magnetic stripe, a card reader writer for hybrid cards, that performs the data processing on a hybrid card with both IC contacts and magnetic stripe, etc.

According to the invention, since the first joint, the second joint, and the second fulcrum are aligned substantially on a straight line when the pawl blocks the passage of a card to lock the card, even when the card is pulled during the data processing on the card, the pulling force is cancelled by the second fulcrum so that locking is not released. Also, even when the card is pulled after the data processing is finished, the second beam is turned about the second fulcrum whereby a force in a direction perpendicular to the straight line that connects the first joint, the second joint, and the second fulcrum acts on the second joint to cause the pawl blocking the passage to be cleared from the passage, so that locking of the card can be easily released.

## Claims

1. A card processing unit that is adapted to perform data processing on a card (2) which is inserted, the card processing unit comprising
a first beam (11) that is adapted to turn about a first fulcrum to thereby cause a pawl (11c) to spring into the passageway of a card (2) to block the card's passage (20), and cause the pawl (11c) to retreat from the passageway of the card (2) to clear the passageway,
**characterized by**
a second beam (12) that is adapted to turn about a second fulcrum,
a third beam (13) that is adapted to connect rotatably to the first beam (11) at a first joint other than the first fulcrum and connects rotatably to the second beam (12) at a second joint other than the second fulcrum,
a stopper (16) adapted to restrict movements of the third beam (13), and
an actuator (7, 9) adapted to turn the second beam (12), and
wherein when the pawl (11c) blocks the passage (20) of a card (2), the first joint, the second joint, and the second fulcrum are aligned substantially on a straight line.

2. The card processing unit according to claim 1, wherein when the pawl (11c) blocks the passage (20) of a card (2), a straight line that connects the first joint, the second joint, and the second fulcrum together and a straight line that connects the first joint and the first fulcrum together intersect each other substantially perpendicularly.

3. The card processing unit according to claim 1 or 2, wherein the actuator (7, 9) is adapted to turn the second beam (12) in its predetermined direction whereby the third beam (13) is moved, and the third beam (13) is adapted to turn the first beam (11) in its predetermined direction to cause the pawl (11c) to block the passage (20) of a card (2) and to align the first joint, the second joint, and the second fulcrum substantially on a straight line, and
the stopper (16) is adapted to restrict movement of the third beam after the alignment substantially on a straight line is achieved.

4. The card processing unit according to any one of claims 1 to 3, wherein the actuator (7, 9) comprises a solenoid (7) that is adapted to exert a force to turn the second beam (12) in its predetermined direction, and a spring (9) that is adapted to biase the second beam (12) in a direction opposed to the predetermined direction with a smaller force than the force of the solenoid (7).

5. The card processing unit according to any one of claims 1 to 4, wherein when the pawl (11c) blocks the passage (20) of a card (2), the first joint, the second joint, and the second fulcrum are aligned substantially on a straight line parallel to the passage (20) of a card (2).

## Patentansprüche

1. Kartenverarbeitungseinheit, die dazu ausgelegt ist, eine Datenverarbeitung an einer eingeschobenen Karte (2) durchzuführen, wobei die Kartenverarbeitungseinheit aufweist
einen ersten Träger (11), der dazu ausgelegt ist, sich um einen ersten Drehpunkt zu drehen, um **dadurch** zu bewirken, dass eine Klinke (11c) in den Durchgang einer Karte (2) schnellt, um den Durchlass (20) der Karte zu blockieren, und zu bewirken, dass sich die Klinke (11c) aus dem Durchgang der Karte (2) zurückzieht, um den Durchgang freizugeben,
**gekennzeichnet durch**
einen zweiten Träger (12), der dazu ausgelegt ist, sich um einen zweiten Drehpunkt zu drehen,
einen dritten Träger (13), der dazu ausgelegt ist, mit dem ersten Träger (11) an einem ersten Gelenk drehbar verbunden zu sein, das sich vom ersten Drehpunkt unterscheidet, und mit dem zweiten Träger (12) an einem zweiten Gelenk drehbar verbunden zu sein, das sich vom zweiten Drehpunkt unterscheidet,
einen Anschlag (16), der dazu ausgelegt ist, Bewegungen des dritten Trägers (13) einzuschränken, und
einen Aktuator (7, 9), der dazu ausgelegt ist, den zweiten Träger (12) zu drehen,
wobei, wenn die Klinke (11c) den Durchlass (20) einer Karte (2) blockiert, das erste Gelenk, das zweite Gelenk und der zweite Drehpunkt im Wesentlichen auf einer geraden Linie ausgerichtet sind.

2. Kartenverarbeitungseinheit nach Anspruch 1, wobei, wenn die Klinke (11c) den Durchlass (20) einer Karte (2) blockiert, sich eine gerade Linie, die das erste Gelenk, das zweite Gelenk und den zweiten Drehpunkt miteinander verbindet, und eine gerade Linie, die das erste Gelenk und den ersten Drehpunkt miteinander verbindet, im Wesentlichen senkrecht miteinander schneiden.

3. Kartenverarbeitungseinheit nach Anspruch 1 oder 2, wobei der Aktuator (7, 9) dazu ausgelegt ist, den zweiten Träger (12) in seiner vorbestimmten Richtung zu drehen, wodurch der dritte Träger (13) bewegt wird, und der dritte Träger (13) dazu ausgelegt ist, den ersten Träger (11) in seiner vorbestimmten Richtung zu drehen, um zu bewirken, dass die Klinke (11c) den Durchlass (20) einer Karte (2) blockiert, und um das erste Gelenk, das zweite Gelenk und den zweiten Drehpunkt im Wesentlichen auf einer geraden Linie auszurichten, und
der Anschlag (16) dazu ausgelegt ist, die Bewegung des dritten Trägers einzuschränken, nachdem die Ausrichtung im Wesentlichen auf einer geraden Linie erreicht ist.

4. Kartenverarbeitungseinheit nach einem der Ansprüche 1 bis 3, wobei der Aktuator (7, 9) ein Solenoid (7), das dazu ausgelegt ist, eine Kraft auszuüben, um den zweiten Träger (12) in seiner vorbestimmten Richtung zu drehen, und eine Feder (9), die dazu ausgelegt ist, den zweiten Träger (12) in einer Richtung entgegengesetzt zur vorbestimmten Richtung mit einer kleineren Kraft als der Kraft des Solenoids (7) vorzubelasten, aufweist.

5. Kartenverarbeitungseinheit nach einem der Ansprüche 1 bis 4, wobei, wenn die Klinke (11c) den Durchlass (20) einer Karte (2) blockiert, das erste Gelenk, das zweite Gelenk und der zweite Drehpunkt im Wesentlichen auf einer geraden Linie parallel zum Durchlass (20) einer Karte (2) ausgerichtet sind.

## Revendications

1. Unité de traitement de carte, qui est conçue pour effectuer un traitement de données sur une carte (2) insérée dans l'unité, l'unité de traitement de carte comprenant
une première bielle (11), qui est conçue pour pivoter autour d'un premier pivot pour forcer un cliquet (11c) à sauter dans la voie de passage d'une carte (2) afin de bloquer le passage (20) de la carte, et pour forcer le cliquet (11c) à se retirer de la voie de passage de la carte (2) afin de libérer la voie de passage,
**caractérisée par**
une deuxième bielle (12), qui est conçue pour pivoter autour d'un deuxième pivot,
une troisième bielle (13), qui est conçue pour être reliée à rotation à la première bielle (11) en un premier point d'articulation autre que le premier pivot, et pour être reliée à rotation à la deuxième bielle (12) en un deuxième point d'articulation autre que le deuxième pivot,
une butée (16), conçue pour restreindre les déplacements de la troisième bielle (13),
et un actionneur (7, 9), conçu pour faire pivoter la deuxième bielle (12),
sachant que, lorsque le cliquet (11c) bloque le passage (20) d'une carte (2), le premier point d'articulation, le deuxième point d'articulation et le deuxième pivot sont alignés sensiblement en ligne droite.

2. Unité de traitement de carte selon la revendication 1, selon laquelle, lorsque le cliquet (11c) bloque le passage (20) d'une carte (2), une ligne droite reliant entre eux le premier point d'articulation, le deuxième point d'articulation et le deuxième pivot et une ligne droite reliant entre eux le premier point d'articulation et le premier pivot se coupent sensiblement perpendiculairement.

3. Unité de traitement de carte selon la revendication 1 ou 2,
selon laquelle l'actionneur (7, 9) est conçu pour faire pivoter la deuxième bielle (12) dans sa direction prédéterminée, de sorte que la troisième bielle (13) est déplacée, et la troisième bielle (13) est conçue pour faire pivoter la première bielle (11) dans sa direction prédéterminée pour forcer le cliquet (11c) à bloquer le passage (20) d'une carte (2) et pour aligner le premier point d'articulation, le deuxième point d'articulation et le deuxième pivot sensiblement en ligne droite,
et la butée (16) est conçue pour restreindre le déplacement de la troisième bielle une fois que l'alignement sensiblement en ligne droite est atteint.

4. Unité de traitement de carte selon l'une quelconque des revendications 1 à 3, selon laquelle l'actionneur (7, 9) comprend un solénoïde (7) qui est conçu pour exercer une force pour faire pivoter la deuxième bielle (12) dans sa direction prédéterminée, et un ressort (9) qui est conçu pour précontraindre la deuxième bielle (12) dans une direction opposée à la direction prédéterminée avec une force inférieure à la force du solénoïde (7).

5. Unité de traitement de carte selon l'une quelconque des revendications 1 à 4, selon laquelle, lorsque le cliquet (11c) bloque le passage (20) d'une carte (2), le premier point d'articulation, le deuxième point d'articulation et le deuxième pivot sont alignés sensiblement en ligne droite parallèlement au passage (20) d'une carte (2).
